# EUROPÄISCHE PATENTSCHRIFT

(11) **EP 3 274 213 B1**
(45) Veröffentlichungstag und Bekanntmachung des Hinweises auf die Patenterteilung: **08.12.2021**
(21) Anmeldenummer: 16711646.6
(22) Anmeldetag: 24.03.2016
(51) Int. Cl.: B60N 2/36, B60N 2/68

(54) **ADAPTERANORDUNG FÜR EINEN FAHRZEUGSITZ UND FAHRZEUGSITZ**
ADAPTOR ASSEMBLY FÜR A VEHICLE SEAT AND VEHICLE SEAT
ENSEMBLE ADAPTATEUR POUR SIÈGE DE VÉHICULE ET SIÈGE DE VÉHICULE

(30) Priorität: 27.03.2015 DE 102015205660
(43) Veröffentlichungstag der Anmeldung: 31.01.2018
(73) Patentinhaber: KEIPER Seating Mechanisms Co., Ltd., Shanghai 201315 (CN)
(72) Erfinder: RAPEDIUS, Joerg, 67728 Muenchweiler (DE); MUELLER, Peter, 67686 Mackenbach (DE); HAENSEL, Richard, 55237 Flonheim (DE); MIZERSKI, Piotr, 67657 Kaiserslautern (DE)
(74) Vertreter: Liedtke & Partner Patentanwälte
(86) Internationale Anmeldenummer: PCT/EP2016/056489
(87) Internationale Veröffentlichungsnummer: WO 2016/156178

(56) Entgegenhaltungen:
- DE-A1-102012 011 515
- DE-B3-102014 202 239
- GB-A- 2 367 041
- JP-A- H09 104 267
- US-A1- 2008 296 948

## Beschreibung

Die Erfindung betrifft einen Fahrzeugsitz mit einem Strukturbauteil, einer Verriegelungseinheit zur Verriegelung des Strukturbauteils mit einem weiteren Bauteil, und einer mit dem Strukturbauteil verbundenen Adapteranordung zur Anbindung der Verriegelungseinheit an das Strukturbauteil des Fahrzeugsitzes, wobei die Verriegelungseinheit ein Gehäuse aufweist, und die Adapteranordung das Gehäuse in zwei entgegengesetzten Richtungen abstützt, wobei die Adapteranordung ein erstes Adapterteil und ein zweites Adapterteil umfasst.

### Stand der Technik

Aus der DE 10 2012 011 515 A1 ist eine Verriegelungseinheit für einen Fahrzeugsitz bekannt, umfassend eine schwenkbar gelagerte Drehfalle zum Verriegeln mit einem als Bolzen ausgeführten Gegenelement. Die Drehfalle weist ein Hakenmaul zur Aufnahme des Bolzens sowie eine Rastklinke auf, welche im Crashfall einen verriegelten Zustand der Verriegelungseinheit sichert, indem die Drehfalle sich an einer Kontaktstelle an der Rastklinke abstützt. Derartige Schlösser weisen hohe Verriegelungsfestigkeiten auf, wenn die Kraftrichtung in Längsrichtung erfolgt, das heißt senkrecht zu einer Drehachse der Drehfalle.

Die US 2008/296948 A1 offenbart eine Adapteranordung für einen Fahrzeugsitz zur Anbindung einer Verriegelungseinheit an ein Strukturbauteil des Fahrzeugsitzes, wobei die Verriegelungseinheit ein Gehäuse aufweist. Eine Basisplatte des Gehäuses liegt in nur genau einer Querrichtung an der Adapteranordung an. In der entgegengesetzten Querrichtung ist das Gehäuse mittels Schrauben oder Nieten an der Adapteranordung befestigt.

Die JP H09 104267 A offenbart eine Anbindung einer Verriegelungseinheit an ein Strukturbauteil eines Fahrzeugsitzes, wobei die Verriegelungseinheit ein Gehäuse aufweist. Zwei Gehäuseplatten des Gehäuses sind mit dem Strukturbauteil verschraubt. Das Gehäuse ist in einer Querrichtung durch Schrauben fixiert.

Die GB 2 367 041 A offenbart eine Adapteranordung für einen Fahrzeugsitz zur Anbindung einer Verriegelungseinheit an ein Strukturbauteil des Fahrzeugsitzes, wobei die Verriegelungseinheit ein Gehäuse aufweist, und die Adapteranordung das Gehäuse in nur genau einer Querrichtung abstützt.

Die DE 10 2014 202 239 B3 offenbart eine Verriegelungseinheit, die unmittelbar an ein Strukturbauteil eines Fahrzeugsitzes angeschraubt ist. Aus der US 2008/296948 A1 ist eine Verriegelungseinheit bekannt.

### Aufgabe

Der Erfindung liegt die Aufgabe zu Grunde, einen Fahrzeugsitz mit einer Adapteranordung zur Befestigung einer eingangs genannten Verriegelungseinheit an einem Strukturbauteil des Fahrzeugsitzes bereitzustellen, die die Verriegelungseinheit in einer Querrichtung verstärkt.

### Lösung

Diese Aufgabe wird erfindungsgemäß gelöst durch einen Fahrzeugsitz mit den Merkmalen des Anspruchs 1.

Dadurch, dass die Adapteranordung das Gehäuse in und entgegen einer Querrichtung abstützt, ist die Verriegelungseinheit verstärkt. Die Adapteranordung des erfindungsgemäßen Fahrzeugsitzes ermöglicht eine höhere Belastbarkeit der Verriegelungseinheit durch Abstützung des Gehäuses an der Adapteranordung in und entgegen der Querrichtung. Zudem können sich eine Drehfalle und/oder eine Rastklinke unter Zwischenlage des Gehäuses an der Adapteranordung abstützen. Dies erhöht die Lastaufnahmefähigkeit der Verriegelungseinheit insbesondere bei seitlichen Lasten. Die Gefahr eines seitlichen Ausknickens von Drehfalle und Rastklinke ist reduziert. Gegenüber einer aus dem Stand der Technik bekannten Befestigung der Verriegelungseinheit, bei der das Gehäuse seitlich an das Strukturbauteil angeschraubt ist, kann die Verriegelungseinheit kleiner und leichter ausgeführt sein, bei gleicher Festigkeit im montierten Zustand.

Das Gehäuse kann einteilig sein. Das Gehäuse kann zwei Gehäuseteile aufweisen. Das Gehäuse kann mehrere Gehäuseteile aufweisen. Das Gehäuse kann geschlossen sein. Das Gehäuse kann weitgehend geschlossen sein. Das Gehäuse kann weitgehend offen sein. Das Gehäuse kann eine einfache Trägerplatte sein. Das Gehäuse kann eine einfache Trägerplatte mit Distanzbolzen sein. Insofern umfasst der Begriff Gehäuse alle Bauteile, die geeignet sind bewegte Teile einer Verriegelungsvorrichtung, insbesondere als Drehachsen dienende Bolzen, aufzunehmen und/oder zu lagern. Das Gehäuse gewährleistet die Montage der Verriegelungsvorrichtung zu einer funktionsfähigen Einheit.

Vorzugsweise umfasst die Adapteranordung mindestens zwei Adapterteile, höchst vorzugsweise genau zwei Adapterteile. Die beiden Adapterteile können dadurch jeweils einfach und kostengünstig geformt sein. Im Vergleich zu einer einteiligen Adapteranordnung sind die beiden Adapterteile einfacher herzustellen, insbesondere als abgekantete Bleche.

Die Verriegelungseinheit ist vorzugsweise mit der Adapteranordnung verschraubt.

Die Verriegelungseinheit ist vorzugsweise mit zwei Adapterteilen der Adapteranordnung verschraubt. Eine solche Verschraubung der Verriegelungseinheit verbindet die Adapterteile zu einer Umklammerung. Die Anbindung der Verriegelungseinheit an das Strukturbauteil ist dadurch hochfest und steif. Ist das Strukturbauteil eine Lehne und das Gegenelement an der Fahrzeugkarosserie befestigt, so kann die Lehne in Querrichtung hohe Kräfte in die Fahrzeugkarosserie einleiten. Es tritt ein sogenannter Seilzugeffekt in Querrichtung ein.

Vorzugsweise ist die Adapteranordnung mit dem Strukturbauteil verschweißt. Alternativ kann die Adapteranordnung mit dem Strukturbauteil verschraubt, vernietet und/oder verklebt sein. Grundsätzlich eignen sich alle bekannten Fügeverfahren zum Verbinden der Adapteranordnung mit dem Strukturbauteil.

Die Adapteranordnung ist vorzugsweise aus einem hochfesten Material, beispielsweise Metall, Blech, Stahlblech oder einem Composite-Werkstoff. Besonders geeignet ist Stahlblech der Legierung S355MC oder S700MC.

Das Strukturbauteil kann eine Lehnenstruktur sein, die mittels der Verriegelungseinheit mit einer Fahrzeugkarosserie oder einem weiteren Bauteil des Fahrzeugsitzes verriegelbar ist. Das Strukturbauteil kann eine Sitzunterbaustruktur eines Sitzteils des Fahrzeugsitzes sein, die mittels der Verriegelungseinheit mit einem Fahrzeugboden oder einem weiteren Bauteil des Fahrzeugsitzes verriegelbar ist. Unter einer Sitzunterbaustruktur ist insbesondere die tragende Struktur eines Sitzteils des Fahrzeugsitzes zu verstehen.

Vorzugsweise weist die Adapteranordnung eine Öffnung auf, durch die hindurch das Gegenelement in die Verriegelungseinheit eintreten kann.

Vorzugsweise ist die Adapteranordnung derart dimensioniert, dass die Verriegelungseinheit in Längsrichtung betrachtet neben dem Strukturbauteil angeordnet ist. Dadurch werden Biegemomente zwischen der Verriegelungseinheit und dem Strukturbauteil weitgehend reduziert.

Das Gegenelement kann ein gebogener Draht sein. Das Gegenelement kann ein Bügel sein. Das Gegenelement kann ein Bolzen sein.

### Figuren und Ausführungsformen der Erfindung

Im Folgenden ist die Erfindung anhand von in den Figuren dargestellten vorteilhaften Ausführungsbeispielen näher erläutert. Die Erfindung ist jedoch nicht auf diese Ausführungsbeispiele beschränkt. Es zeigen:
- Fig. 1:: Eine schematische Seitenansicht eines Fahrzeugsitzes und ausschnittsweise einer Fahrzeugkarosserie,
- Fig. 2:: eine schematische, perspektivische Ansicht eines aus dem Stand der Technik bekannten, im Verhältnis 1/3 : 2/3 geteilten, Fahrzeugsitzes,
- Fig. 3:: eine aus dem Stand der Technik bekannte Verriegelungsvorrichtung,
- Fig. 4:: schematisch ein erstes Ausführungsbeispiel eines erfindungsgemäßen Fahrzeugsitzes in Schnittdarstellung im Bereich einer Lehnenstruktur,
- Fig. 5:: ausschnittsweise ein zweites Ausführungsbeispiel eines erfindungsgemäßen Fahrzeugsitzes in perspektivischer Ansicht und mit montierter Verriegelungseinheit, sowie ein Gegenelement, und
- Fig. 6:: ausschnittsweise ein drittes Ausführungsbeispiel eines erfindungsgemäßen Fahrzeugsitzes in Schnittdarstellung, mit montierter Verriegelungseinheit, sowie ein Gegenelement.

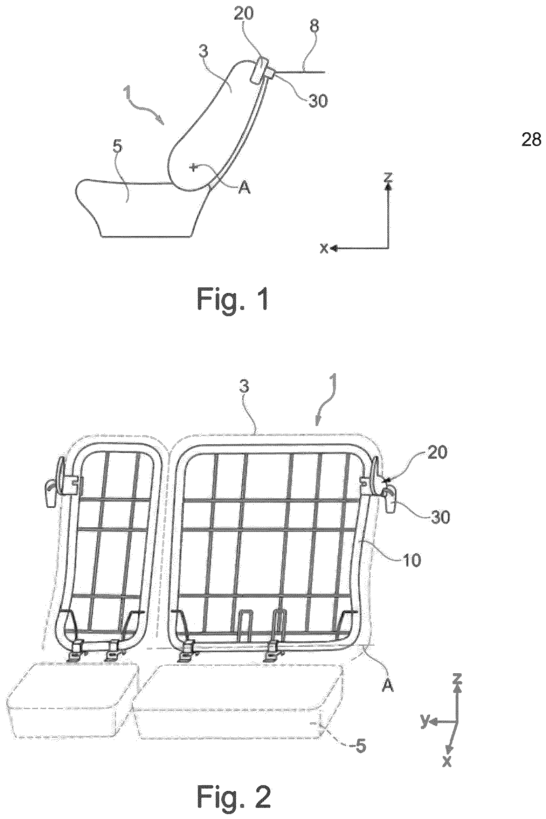

Figur 1 zeigt einen Fahrzeugsitz 1, der vorliegend als ein 2/3-Sitz einer 1/3 : 2/3 geteilten Rücksitzanlage ausgeführt ist. Der Fahrzeugsitz 1 umfasst eine Lehne 3 und ein Sitzteil 5.

Der Fahrzeugsitz 1 wird nachfolgend unter Verwendung von drei senkrecht zueinander verlaufenden Raumrichtungen beschrieben. Eine Längsrichtung x verläuft bei einem im Fahrzeug eingebauten Fahrzeugsitz 1 weitgehend horizontal und vorzugsweise parallel zu einer Fahrzeuglängsrichtung, die der gewöhnlichen Fahrtrichtung des Fahrzeuges entspricht. Eine zu der Längsrichtung x senkrecht verlaufende Querrichtung y ist im Fahrzeug ebenfalls horizontal ausgerichtet und verläuft parallel zu einer Fahrzeugquerrichtung. Eine Vertikalrichtung z verläuft senkrecht zu der Längsrichtung x und senkrecht zu der Querrichtung y. Bei einem im Fahrzeug eingebauten Fahrzeugsitz 1 verläuft die Vertikalrichtung z parallel zu der Fahrzeughochachse.

Die verwendeten Positions- und Richtungsangaben, wie beispielsweise vorne, hinten, oben und unten beziehen sich auf eine Blickrichtung eines im Fahrzeugsitz 1 sitzenden Insassen in normaler Sitzposition, wobei der Fahrzeugsitz 1 im Fahrzeug eingebaut, in einer zur Personenbeförderung geeigneten Gebrauchsposition mit aufrecht stehender Lehne 3 und wie üblich in Fahrtrichtung ausgerichtet ist. Der erfindungsgemäße Fahrzeugsitz 1 kann jedoch auch in abweichender Ausrichtung, beispielsweise quer zur Fahrtrichtung verbaut werden.

Figur 2 zeigt einen aus dem Stand der Technik bekannten Fahrzeugsitz 1 und einen vergleichbar aufgebauten 1/3 Sitz einer geteilten Rücksitzanlage. Die Lehne 3 umfasst als Strukturbauteil eine Lehnenstruktur 10, die ein Polster trägt. Die Lehnenstruktur 10 ist vorliegend als eine Rohrrahmenstruktur ausgebildet. Die Lehne 3 ist um eine parallel zur Querrichtung y verlaufende Lehnenschwenkachse A schwenkbar, so dass die Lehne 3 auf das Sitzteil 5 geklappt werden kann. In einer zum Personentransport geeigneten aufrechten Position der Lehne 3 kann diese mittels einer Verriegelungseinheit 20 mit einem an der Fahrzeugkarosserie 8 befestigten Gegenelement 30, vorliegend einem Verriegelungsbügel aus gebogenem Draht, verriegelt werden.

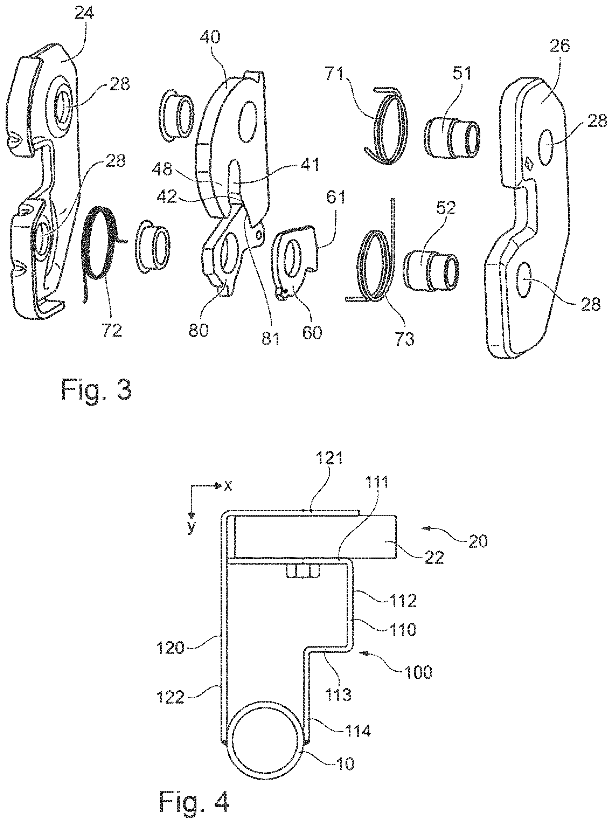

Die Verriegelungseinheit 20 kann ein an sich bekanntes Drehfallenschloss sein, dessen Einzelteile weitgehend in einem Gehäuse 22 angeordnet sind. Eine solche Verriegelungseinheit 20 ist beispielsweise aus der DE 10 2012 011 515 A1 bekannt, deren Offenbarungsgehalt bezüglich des grundsätzlichen Aufbaus einer solchen Verriegelungseinheit ausdrücklich einbezogen und nachfolgend unter Bezug auf Figur 3 zusammenfassend beschrieben wird.

Figur 3 zeigt eine aus dem Stand der Technik bekannte Verriegelungseinheit 20, zu deren Anbindung an ein Strukturbauteil, vorliegend an die Lehnenstruktur 10, eine nachfolgend noch näher beschriebene Adapteranordung 100 dient. Die Verriegelungseinheit 20 ist auch an anderen Stellen einsetzbar, beispielsweise zur Befestigung des Sitzteils 5 des Fahrzeugsitzes 1 an einer Bodenstruktur des Kraftfahrzeugs oder in einem Türschloss. Die Adapteranordung 100 ist nicht auf diese Ausführung der Verriegelungseinheit 20 beschränkt.

Die Verriegelungseinheit 20 weist ein Gehäuse 22 auf, welches eine erste Seitenplatte 24 und eine zweite Seitenplatte 26 umfasst. Die Grundflächen der Seitenplatten 24, 26 sind vorliegend weitgehend flach ausgestaltet und in einer durch die Längsrichtung x und die Vertikalrichtung z definierten Ebene angeordnet, also senkrecht zur Querrichtung y. Die Grundflächen sind abschnittsweise von einem rechtwinklig abstehenden Flansch umrandet. Jede der Seitenplatten 24, 26 umfasst zwei vorliegend kreisrund ausgeführte Lagerbohrungen 28.

Die erste Seitenplatte 24 und die zweite Seitenplatte 26 bilden eine Aufnahme aus, welche sich in Richtung des Gegenelements 30 öffnet, um dieses zum Verriegeln aufnehmen zu können. Der von der Aufnahme aufzunehmende Abschnitt des Gegenelements 30 verläuft horizontal in Querrichtung y.

Eine Drehfalle 40 ist auf einem ersten Lagerbolzen 51 schwenkbar gelagert, welcher wiederum an der ersten Seitenplatte 24 und an der zweiten Seitenplatte 26 befestigt ist. Die Drehfalle 40 weist zum Zusammenwirken mit dem Gegenelement 30 ein Hakenmaul 41 auf. Mittels einer Feder 71 ist die Drehfalle 40 in Öffnungsrichtung vorgespannt. Auf einem zweiten Lagerbolzen 52 ist schwenkbar ein Spannelement 60 gelagert. Mittels einer weiteren Feder 73 ist das Spannelement 60 zu der Drehfalle 40 hin vorgespannt. Auf dem zweiten Lagerbolzen 52 ist zudem eine Rastklinke 80 axial neben dem Spannelement 60 angeordnet und ebenfalls schwenkbar auf dem zweiten Lagerbolzen 52 gelagert, also mit dem Spannelement 60 fluchtend. Mittels noch einer weiteren Feder 72 ist die Rastklinke 80 zu der Drehfalle 40 hin vorgespannt. Die Rastklinke 80 und das Spannelement 60 sind mit einem Leerweg auf Mitnahme gekoppelt, beispielsweise mittels einer Schlitz-Zapfen-Führung oder mittels eines axial abstehenden Mitnehmers.

Im verriegelten Zustand, wenn das Hakenmaul 41 der Drehfalle 40 das Gegenelement 30 aufnimmt, übt das Spannelement 60 aufgrund der Vorspannung durch die weitere Feder 73 als Sicherungselement ein schließendes Moment auf die Drehfalle 40 aus. Dazu weist das Spannelement 60 eine exzentrisch zum zweiten Lagerbolzen 52 gekrümmte Spannfläche 61 auf, welche sich in nichtselbsthemmendem Kontakt mit der Funktionsfläche 42 der Drehfalle 40 befindet. Die Rastklinke 80 weist eine Rastfläche 81 auf, welche sich in Nachbarschaft zu der Spannfläche 61 des Spannelements 60 befindet. Im verriegelten Zustand ist die Rastfläche 81 beabstandet zu der Funktionsfläche 42 der Drehfalle 40 positioniert. Die Rastfläche 81 ist vorliegend kreisbogenförmig gekrümmt und konvex ausgebildet, kann aber auch eben sein.

Im verriegelten Zustand zwischen Verriegelungseinheit 20 und Gegenelement 30 liegt das Gegenelement 30 im Hakenmaul 41 an einer Nase 48 der Drehfalle 40 an. Unter hoher Belastung erfährt die Drehfalle 40 durch das Gegenelement 30 ein öffnendes Moment und drückt das Spannelement 60 weg. Dadurch gelangt die Rastfläche 81 der Rastklinke 80 zunächst in Anlage an die Funktionsfläche 42 der Drehfalle 40. So dient die Rastklinke 80 einer Abstützung der Drehfalle 40 und verhindert als Sicherungselement eine weitere Drehung der Drehfalle 40 in Öffnungsrichtung. Damit verhindert die Rastklinke 80 ein Öffnen der Drehfalle 40.

Die Figuren 4 bis 6 zeigen drei Ausführungsbeispiele eines erfindungsgemäßen Fahrzeugsitzes 1 mit einer Adapteranordnung 100. Die Verriegelungseinheit 20 ist jeweils mittels der Adapteranordnung 100 fest mit der Lehnenstruktur 10 verbunden. Die drei Ausführungsbeispiele basieren auf dem gleichen Grundprinzip, das nachfolgend beschrieben ist.

Die Adapteranordnung 100 umfasst ein erstes Adapterteil 110 und ein zweites Adapterteil 120. Vorliegend ist die Adapteranordnung 100 mit der Lehnenstruktur 10 verbunden, insbesondere verschweißt. Das Gehäuse 22 der Verriegelungseinheit 20 ist in zwei entgegengesetzten Richtungen abstützt, vorliegend in und entgegen der Querrichtung y. Das Gehäuse 22 ist in Querrichtung y zwischen dem ersten Adapterteil 110 und dem zweiten Adapterteil 120 angeordnet. Das erste Adapterteil 110 und das zweite Adapterteil 120 verstärken das Gehäuse 22 der Verriegelungseinheit 20. Dadurch ist die Lastaufnahmefähigkeit der Verriegelungseinheit 20, insbesondere in Querrichtung y, deutlich erhöht. Die Adapteranordnung 100 vermeidet ein Ausknicken von Drehfalle 40, Spannelement 60 und Rastklinke 80 bei in Querrichtung y über das Gegenelement 30 auf die Drehfalle 40 einwirkenden Kräften.

In Figur 4 ist ein erstes Ausführungsbeispiel einer Adapteranordnung 100 eines erfindungsgemäßen Fahrzeugsitzes erkennbar. Das erste Adapterteil 110 ist ein dreifach abgewinkeltes Blech. Durch die drei Abwinklungen hat das erste Adapterteil 110 vier Abschnitte, die weitgehend eben sind.

Ein erster Abschnitt 111 des ersten Adapterteils 110 verläuft senkrecht zur Querrichtung y und somit parallel zu den Seitenplatten 24, 26 des Gehäuses 22. Der erste Abschnitt 111 ist in Querrichtung y zwischen der Lehnenstruktur 10 und der Verriegelungseinheit 20 angeordnet. Der erste Abschnitt 111 ist in Querrichtung y beabstandet zu der Lehnenstruktur 10 angeordnet. Die Verriegelungseinheit 20 liegt auf einer der Lehnenstruktur 10 abgewandten Seite des ersten Abschnitts 111 an dem ersten Abschnitt 111 an. Das Gehäuse 22 der Verriegelungseinheit 20 liegt auf einer der Lehnenstruktur 10 abgewandten Seite des ersten Abschnitts 111 an dem ersten Abschnitt 111 an.

Ein zweiter Abschnitt 112 des ersten Adapterteils 110 schließt sich rechtwinklig an den ersten Abschnitts 111 an und läuft in Querrichtung y auf die Lehnenstruktur 10 zu.

Ein dritter Abschnitt 113 des ersten Adapterteils 110 schließt sich rechtwinklig an den zweiten Abschnitt 112 an und verläuft senkrecht zur Querrichtung y. Der erste Abschnitt 111, der zweite Abschnitt 112 und der dritte Abschnitt 113 bilden eine U-Form, die entgegen der Fahrtrichtung geöffnet ist.

Ein vierter Abschnitt 114 des ersten Adapterteils 110 schließt sich rechtwinklig an den dritten Abschnitt 113 an und läuft in Querrichtung y auf die Lehnenstruktur 10 zu. Der vierte Abschnitt 114 liegt an der Lehnenstruktur 10 an und ist mit dieser verschweißt.

Das zweite Adapterteil 120 ist ein L-förmig abgewinkeltes Blech. Durch eine Abwinklungen hat das zweite Adapterteil 120 zwei Bereiche 121, 122, die weitgehend eben sind.

Ein erster Bereich 121 des zweiten Adapterteils 120 verläuft senkrecht zur Querrichtung y und somit parallel zu den Seitenplatten 24, 26 des Gehäuses 22. Der erste Bereich 121 liegt in Querrichtung y auf der von der Lehnenstruktur 10 abgewandten Seite der Verriegelungseinheit 20 an deren Gehäuse 22 an.

Der erste Bereich 121 ist in Querrichtung y beabstandet zu der Lehnenstruktur 10 angeordnet. Der erste Bereich 121 des zweiten Adapterteils 120 und der erste Abschnitt 111 des ersten Adapterteils 110 sind in Querrichtung y zueinander beabstandet. Die lichte Weite zwischen dem ersten Bereich 121 und dem ersten Abschnitt 111 entspricht der Abmessung der Verriegelungseinheit 20 in Querrichtung y. Das Gehäuse 22 der Verriegelungseinheit 20 ist zwischen dem ersten Bereich 121 und dem ersten Abschnitt 111 angeordnet und dadurch in Querrichtung y fixiert. Das Gehäuse 22 ist mit dem ersten Abschnitt 111 und vorzugsweise auch mit dem ersten Bereich 121 verschraubt. Vorzugsweise laufen die Schrauben durch die als Hohlbolzen ausgebildeten Lagerbolzen 51, 52 der Verriegelungseinheit 20. In dem ersten Bereich 121 des zweiten Adapterteils 120 können Durchgangslöcher für diese Schrauben und in dem ersten Abschnitt 111 des ersten Adapterteils 120 Gewinde zum Einschrauben dieser Schrauben vorgesehen sein.

Ein zweiter Bereich 122 des zweiten Adapterteils 120 schließt sich rechtwinklig an den ersten Bereich 121 an und läuft in Querrichtung y auf die Lehnenstruktur 10 zu. Der zweite Bereich 122 liegt an der Lehnenstruktur 10 an und ist mit dieser verschweißt.

Der erste Bereich 121 und der zweite Bereich 122 weisen jeweils eine schlitzförmige Teilöffnung auf, die miteinander zu einer Öffnung verbunden sind und einen Eintritt des Gegenelements 30 in die Verriegelungseinheit 20 ermöglichen.

Die Verriegelungseinheit 20 ist derart angeordnet, dass eine Kontaktstelle zwischen der Drehfalle 40 der Verriegelungseinheit 20 und dem Gegenelement 30 in Längsrichtung x annähernd die gleiche Position wie die Lehnenstruktur 10 auf Höhe der Verriegelungseinheit 20 hat.

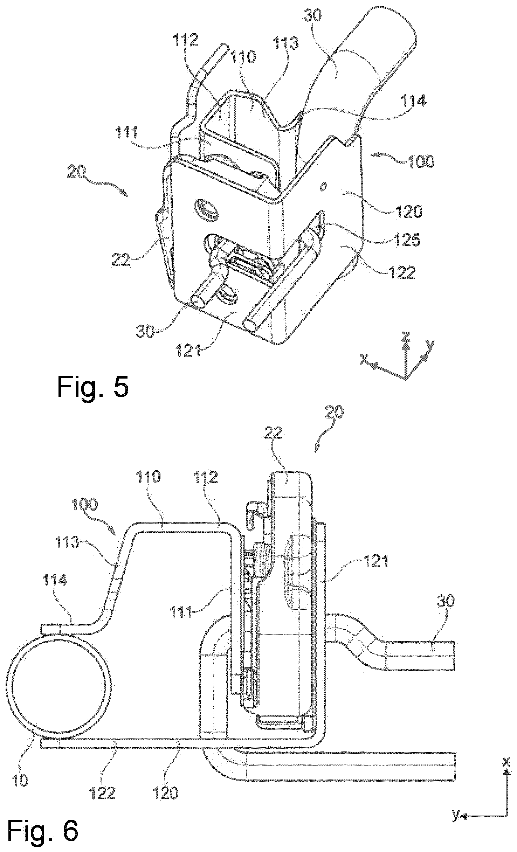

In Figur 5 ist ein zweites Ausführungsbeispiel einer Adapteranordnung 100 eines erfindungsgemäßen Fahrzeugsitzes 1 erkennbar. Das zweite Ausführungsbeispiel entspricht bis auf unterschiedliche Maße dem ersten Ausführungsbeispiel. Gleiche Bauteile tragen gleiche Bezugszeichen. Der erste Bereich 121 und der zweite Bereich 122 weisen jeweils eine schlitzförmige Teilöffnung auf, die miteinander zu einer Öffnung 125 verbunden sind.

In Figur 6 ist ein drittes Ausführungsbeispiel einer Adapteranordnung 100 eines erfindungsgemäßen Fahrzeugsitzes 1 erkennbar. Das dritte Ausführungsbeispiel entspricht bis auf unterschiedliche Maße und leicht abweichende Winkel zwischen den Abschnitten 112, 113, 114 des ersten Adapterteils 110 dem ersten Ausführungsbeispiel. Gleiche Bauteile tragen gleiche Bezugszeichen.

Obwohl die Erfindung in den Zeichnungen und der vorausgegangenen Darstellung im Detail beschrieben wurde, sind die Darstellungen illustrativ und beispielhaft und nicht einschränkend zu verstehen. Insbesondere ist die Wahl der zeichnerisch dargestellten Proportionen der einzelnen Elemente nicht als erforderlich oder beschränkend auszulegen. Weiterhin ist die Erfindung insbesondere nicht auf die erläuterten Ausführungsbeispiele beschränkt. Weitere Varianten der Erfindung und ihre Ausführung ergeben sich für den Fachmann aus der vorangegangenen Offenbarung, den Figuren und den Schutzansprüchen.

In den Schutzansprüchen verwendete Begriffe wie "umfassen", "aufweisen", "beinhalten", "enthalten" und dergleichen schließen weitere Elemente oder Schritte nicht aus. Die Verwendung des unbestimmten Artikels schließt eine Mehrzahl nicht aus.

### Bezugszeichenliste

- 1: Fahrzeugsitz
- 3: Lehne
- 5: Sitzteil
- 8: Fahrzeugkarosserie
- 10: Strukturbauteil, Lehnenstruktur
- 20: Verriegelungseinheit
- 22: Gehäuse
- 24: erste Seitenplatte
- 26: zweite Seitenplatte
- 28: Lagerbohrung
- 30: Gegenelement
- 40: Drehfalle
- 41: Hakenmaul
- 42: Funktionsfläche
- 48: Nase
- 51: erster Lagerbolzen
- 52: zweiter Lagerbolzen
- 60: Spannelement
- 61: Spannfläche
- 71: Feder
- 72: Feder
- 73: Feder
- 80: Rastklinke
- 81: Rastfläche
- 100: Adapteranordung
- 110: erstes Adapterteil
- 111: erster Abschnitt
- 112: zweiter Abschnitt
- 113: dritter Abschnitt
- 114: vierter Abschnitt
- 120: zweites Adapterteil
- 121: erster Bereich
- 122: zweiter Bereich
- 125: Öffnung
- A: Lehnenschwenkachse
- X: Längsrichtung
- Y: Querrichtung
- Z: Vertikalrichtung

## Patentansprüche

1. Fahrzeugsitz (1) mit einem Strukturbauteil (10), einer Verriegelungseinheit (20) zur Verriegelung des Strukturbauteils (10) mit einem weiteren Bauteil (30), und einer mit dem Strukturbauteil (10) verbundenen Adapteranordung (100) zur Anbindung der Verriegelungseinheit (20) an das Strukturbauteil (10) des Fahrzeugsitzes (1), wobei die Verriegelungseinheit (20) ein Gehäuse (22) aufweist, und die Adapteranordung (100) das Gehäuse (22) in zwei entgegengesetzten Richtungen abstützt, wobei die Adapteranordung (100) ein erstes Adapterteil (110) und ein zweites Adapterteil (120) umfasst, **dadurch gekennzeichnet, dass** das Gehäuse (22) in einer Querrichtung (y) zwischen dem ersten Adapterteil (110) und dem zweiten Adapterteil (120) angeordnet ist, wobei die Adapteranordung (100) das Gehäuse (22) in und entgegen der Querrichtung (y) abstützt.

2. Fahrzeugsitz (1) nach Anspruch 1, **dadurch gekennzeichnet, dass** die Adapteranordung (100) genau zwei Adapterteile (110, 120) aufweist.

3. Fahrzeugsitz (1) nach Anspruch 1 oder 2, **dadurch gekennzeichnet, dass** wenigstens ein Adapterteil (110, 120) der Adapteranordung (100) ein abgekantetes Blech ist.

4. Fahrzeugsitz (1) nach einem der Ansprüche 1 bis 3, **dadurch gekennzeichnet, dass** die Adapteranordung (100) mit der Verriegelungseinheit (20) verschraubbar ist.

5. Fahrzeugsitz (1) nach einem der Ansprüche 1 bis 4, **dadurch gekennzeichnet, dass** die beiden Adapterteile (110, 120) zu einer Umklammerung verschraubt sind.

6. Fahrzeugsitz (1) nach Anspruch 5, **dadurch gekennzeichnet, dass** in einem ersten Bereich (121) des zweiten Adapterteils (120) wenigstens ein Durchgangsloch für eine Schraube und in einem ersten Abschnitt (111) des ersten Adapterteils (110) wenigstens ein dem Durchgangsloch in Querrichtung (y) gegenüberliegendes Gewinde zum Einschrauben der Schraube vorgesehen sind.

7. Fahrzeugsitz (1) nach Anspruch 6, **dadurch gekennzeichnet, dass** die wenigstens eine Schraube durch einen als Hohlbolzen ausgeführten Lagerbolzen (51, 52) der Verriegelungseinheit (20) läuft.

8. Fahrzeugsitz (1) nach einem der Ansprüche 1 bis 7, **dadurch gekennzeichnet, dass** die Adapteranordnung (100) eine Öffnung (125) aufweist, durch die hindurch ein Gegenelement (30), insbesondere ein an einer Fahrzeugkarosserie (8) befestigtes Gegenelement (30), mit einer Drehfalle (40) der Verriegelungseinheit (20) zusammenwirken kann.

9. Fahrzeugsitz (1) nach einem der Ansprüche 1 bis 8, **dadurch gekennzeichnet, dass** die Adapteranordnung (100) mit dem Strukturbauteil (10) verschweißt ist.

10. Fahrzeugsitz (1) nach einem der Ansprüche 1 bis 9, **dadurch gekennzeichnet, dass** das Strukturbauteil (10) eine Struktur einer Lehne (3) des Fahrzeugsitzes (1) ist.

11. Fahrzeugsitz (1) nach einem der Ansprüche 1 bis 10, **dadurch gekennzeichnet, dass** das Strukturbauteil (10) eine Sitzunterbaustruktur des Fahrzeugsitzes (1) ist.

## Claims

1. Vehicle seat (1) with a structural component (10), a locking unit (20) for locking the structural component (10) to another component (30), and an adapter arrangement (100) which is connected to the structural component (10) and which is intended to connect the locking unit (20) to the structural component (10) of the vehicle seat (1), wherein the locking unit (20) has a housing (22), and the adapter arrangement (100) braces the housing (22) in two opposite directions, wherein the adapter arrangement (100) comprises a first adapter part (110) and a second adapter part (120), **characterized in that** the housing (22) is arranged in a transverse direction (y) between the first adapter part (110) and the second adapter part (120), wherein the adapter arrangement (100) braces the housing (22) in and against the transverse direction (y).

2. Vehicle seat (1) according to Claim 1, **characterized in that** the adapter arrangement (100) comprises precisely two adapter parts (110, 120).

3. Vehicle seat (1) according to Claim 1 or 2, **characterized in that** at least one adapter part (110, 120) of the adapter arrangement (100) is a bent metal sheet.

4. Vehicle seat (1) according to one of Claims 1 to 3, **characterized in that** the adapter arrangement (100) can be screwed together with the locking unit (20).

5. Vehicle seat (1) according to one of Claims 1 to 4, **characterized in that** the two adapter parts (110, 120) are screwed together to form a clasp.

6. Vehicle seat (1) according to Claim 5, **characterized in that**, in a first region (121) of the second adapter part (120), at least one through hole is provided for a screw, and, in a first section (111) of the first adapter part (110), at least one thread is provided opposite the through hole in the transverse direction (y) for screwing in the screw.

7. Vehicle seat (1) according to Claim 6, **characterized in that** the at least one screw runs through a bearing bolt (51, 52), embodied as a hollow bolt, of the locking unit (20).

8. Vehicle seat (1) according to one of Claims 1 to 7, **characterized in that** the adapter arrangement (100) has an opening (125) through which a mating element (30), in particular a mating element (30) secured to a vehicle body (8), can interact with a latch (40) of the locking unit (20).

9. Vehicle seat (1) according to one of Claims 1 to 8, **characterized in that** the adapter arrangement (100) is welded to the structural component (10).

10. Vehicle seat (1) according to one of Claims 1 to 9, **characterized in that** the structural component (10) is a structure of a backrest (3) of the vehicle seat (1).

11. Vehicle seat (1) according to one of Claims 1 to 10, **characterized in that** the structural component (10) is a seat base structure of the vehicle seat (1).

## Revendications

1. Siège de véhicule (1), comprenant un composant structurel (10), une unité de verrouillage (20) pour verrouiller le composant structurel (10) avec un autre composant (30), et un ensemble adaptateur (100) relié au composant structurel (10) pour rattacher l'unité de verrouillage (20) au composant structurel (10) du siège de véhicule (1), l'unité de verrouillage (20) présentant un boîtier (22), et l'ensemble adaptateur (100) soutenant le boîtier (22) dans deux directions opposées, l'ensemble adaptateur (100) comprenant une première partie d'adaptateur (110) et une deuxième partie d'adaptateur (120),
**caractérisé en ce que** le boîtier (22) est disposé dans une direction transversale (y) entre la première partie d'adaptateur (110) et la deuxième partie d'adaptateur (120), l'ensemble adaptateur (100) soutenant le boîtier (22) dans et à l'opposé de la direction transversale (y).

2. Siège de véhicule (1) selon la revendication 1, **caractérisé en ce que** l'ensemble adaptateur (100) présente exactement deux parties d'adaptateur (110, 120) .

3. Siège de véhicule (1) selon la revendication 1 ou 2, **caractérisé en ce qu'**au moins une partie d'adaptateur (110, 120) de l'ensemble adaptateur (100) est une tôle pliée.

4. Siège de véhicule (1) selon l'une quelconque des revendications 1 à 3, **caractérisé en ce que** l'ensemble adaptateur (100) peut être vissé avec l'unité de verrouillage (20).

5. Siège de véhicule (1) selon l'une quelconque des revendications 1 à 4, **caractérisé en ce que** les deux parties d'adaptateur (110, 120) sont vissées pour former un serrage.

6. Siège de véhicule (1) selon la revendication 5, **caractérisé en ce qu'**au moins un trou traversant pour une vis est prévu dans une première zone (121) de la deuxième partie d'adaptateur (120), et au moins un filet opposé au trou traversant dans la direction transversale (y) pour le vissage de la vis est prévu dans une première portion (111) de la première partie d'adaptateur (110).

7. Siège de véhicule (1) selon la revendication 6, **caractérisé en ce que** ladite au moins une vis passe par un tourillon de palier (51, 52), réalisé sous la forme d'un tourillon creux, de l'unité de verrouillage (20).

8. Siège de véhicule (1) selon l'une quelconque des revendications 1 à 7, **caractérisé en ce que** l'ensemble adaptateur (100) présente une ouverture (125) à travers laquelle un contre-élément (30), en particulier un contre-élément (30) fixé à une carrosserie de véhicule (8), peut coopérer avec un loquet tournant (40) de l'unité de verrouillage (20) .

9. Siège de véhicule (1) selon l'une quelconque des revendications 1 à 8, **caractérisé en ce que** l'ensemble adaptateur (100) est soudé au composant structurel (10).

10. Siège de véhicule (1) selon l'une quelconque des revendications 1 à 9, **caractérisé en ce que** le composant structurel (10) est une structure d'un dossier (3) du siège de véhicule (1).

11. Siège de véhicule (1) selon l'une quelconque des revendications 1 à 10, **caractérisé en ce que** le composant structurel (10) est une sous-structure de siège du siège de véhicule (1).
